# EUROPEAN PATENT SPECIFICATION

(11) **EP 2 403 183 B1**
(45) Date of publication and mention of the grant of the patent: **02.01.2013**
(21) Application number: 10290354.9
(22) Date of filing: 30.06.2010
(51) Int. Cl.: H04L 12/24, G06F 1/32

(54) **Method for managing power consumption in a communication network**
Verfahren zur Verwaltung des Stromverbrauchs in einem Kommunikationsnetzwerk
Procédé de gestion de la consommation électrique dans un réseau de communication

(43) Date of publication of application: 04.01.2012
(73) Proprietor: Alcatel Lucent, 75007 Paris (FR)
(72) Inventor: Donadio, Pasquale, 80129 Napoli (IT); Paparella, Andrea, 21052 Busto Arsizio (IT); Riglietti, Roberto, 20059 Vimercate (IT)
(74) Representative: Wetzel, Emmanuelle

(56) References cited:
- EP-A1- 1 777 607
- WO-A1-2008/088951
- US-A1- 2003 202 655
- US-A1- 2004 163 001
- US-A1- 2009 138 734
- US-A1- 2010 011 230

## Description

### Technical field

The present invention generally relates to the field of the communication networks. In particular, the present invention relates to a method for managing the power consumption in a communication network.

### Background art

As known, the management operations in a communication network comprise:
- detecting potential failures of the network and restore the correct functioning thereof;
- configuring the network elements in order to set up network paths supporting the transmission of services requested by the users;
- updating the software applications of the network elements;
- monitoring data indicative of the network performances, such as the error rate, the throughput, the available bandwidth, the response times, etc.; and
- checking the access to the network as far as security and/or billing issues are concerned.

The network management operations are organized according to a network management model (Telecommunications Management Model, TMN) having a layered structure. In particular, the above mentioned management operations may be performed at a local management layer (Element Management Layer) or at a centralized management layer (Network management Layer).

At the Element Management Layer, the management operations are performed by an Element Management System (EMS). The EMS is typically a computer connected to one or more network elements that stores and executes a set of management programs, each of which is suitable for performing a given management operation upon the network element(s).

At the Network Management Layer, the management operations are performed by a centralized Network Management System (NMS). The NMS is a computer cooperating with the EMS(s) that stores and executes a set of management programs, each of which is suitable for performing a given management operation. Typically, NMS, EMS and network elements communicate via an appropriate management network and suitable management protocols (e.g. SNMP, TL1).

In a communication network, a network path for supporting transmission of a service requested by a user may be calculated and set up either by a centralized mechanism or a local mechanism.

According to the centralized mechanism, the network path may be either manually set up by an operator through a suitable user interface running at the NMS. Alternatively, the network path may be computed automatically by an algorithm running at the NMS that calculates the optimum path, based on the information that the NMS gathers from the network elements through the EMS(s) (network topology, free resources of the various network elements) and based on the traffic demand. The optimum path may be calculated according to different criteria, for instance maximization of the network throughput and/or minimization of delays and costs. The network operator may either accept the optimum path automatically computed by the NMS or manually modify it. Then, the NMS sends to the network elements (through the EMSs) suitable management messages for properly setting their configuration.

According to the local mechanism, the network path is computed by the control plane of the communication network, i.e. by suitable routing protocols suites (e.g. GMPLS, Generalized Multiprotocol Label Switching) implemented at the network elements. A network element may calculate the optimum path by means, for instance, of the OSPF (Open Shortest Path First) protocol and then send information about the calculated path to the other network elements by sending them suitable signaling message according to, for instance, the RSVP (Resource Reservation Protocol).

Typically, the network elements of a communication network are grouped in different sites, each site being for instance a building. The network elements comprised within the same site may in turn comprise equipments supporting different transmission technologies, such as Ethernet switches, IP routers, SDH nodes and WDM nodes. Moreover, each site typically comprises also a cooling system for controlling the temperature of the site in order to guarantee the correct functioning of the equipments comprised therein.

US 2009/0138734 A1 discloses a power control system for a network system in which a plurality of devices are connected over a network that can distribute limited power according to the operational state of each device. A device operating in normal mode broadcasts a power accommodation request when the power of the device is insufficient. Upon reception of the power accommodation request, devices operating in low-power mode send accommodatable power values to the requesting device.

US 2004/0163001 A1 discloses an enterprise power and thermal manager, EPTM, that may change a set target level of power consumption in a computer system dynamically.

WO 2008/088951 A1 discloses a data structure for budgeting power for multiple devices. Devices are allotted a power budget The devices are each capable of operating at one or more power levels. A console queries the devices to obtain the power capabilities of the devices and stores the power capabilities in a data structure. The data structure together with the power budget may then be used to instruct each device to operate at a particular power level.

US 2003/202655 A1 discloses a system for managing power from a power source for at least one line powered network element in an access network. The system includes a power manager that establishes at least one power criterion for the at least one network element.

US 2010/011230 A1 discloses configurations and techniques for determining, by link aggregation logic, whether a load of network traffic communicated across a team of aggregated links allows inactivation of one or more aggregated links of the team, wherein the team of aggregated links is coupled with a plurality of network interface cards (NICs).

EP 1 777 607 A1 discloses an IT network device having a management-addressable address and a management information base. The network device responds to network management requests and delivers, with the response, data from the device's management information base, wherein the network device's own electric power consumption value is stored in the management information base.

### Summary of the Invention

Recently, the need to design communication networks with a controlled and possibly minimized power consumption raised.

This target, on the one hand, allows minimizing the operative costs (OPEX) of the network, that derive *inter alia* from the network power consumption, which grows as the amount of traffic to be supported by the network increases. The power consumption comprises the power consumed by the equipments of the network elements and the power consumed by the cooling systems of the sites. In particular, the power consumption of the equipments varies according to the equipment technology. For example, it is known that the power consumption per Mb/s of an optical device (e.g. an OADM) is lower than the power consumption of an Ethernet switch, an IP router or an SDH node.

On the other hand, minimizing the power consumption of the network allows minimizing environmental impact of the network and hence satisfying the pressing regulations relating to CO₂ emissions.

The inventors have noticed that, in principle, when a communication network is initialized to support the transmission of a given number of services (TDM, WDM or packet-switched services), the network paths may be automatically calculated according to the above mentioned centralized mechanism implemented at the NMS, by an algorithm taking into account (in addition to the above mentioned parameters) also the power consumption of the equipments of the network elements. In particular, the algorithm may be designed to calculate the optimum paths so as to minimize the overall power consumption of the network and, in the meanwhile, making the power consumption of each site (comprising the cooling system) not to exceed a maximum power determined by the NMS. This guarantees that the cooling systems operate according to an optimal working point with respect to the site environment.

After the initialization operation, it may be necessary to set up further network paths supporting transmission of further services (TDM, WDM or packet-switched services). The set up of the further network paths may be either manually performed at the NMS according to the above centralized mechanism, or automatically performed by the control plane according to the above local mechanism.

Setting up the further network paths requires reconfiguring the network elements, which may cause the power consumption of one or more sites to exceed the maximum power determined by the NMS during the initialization operation. To avoid this, the further network paths may be calculated automatically at the NMS by the above mentioned algorithm that takes into account also the power consumption. During such calculation, also the previously calculated network paths may be recalculated. However, disadvantageously, the automatic calculation of the optimum paths carried out by the NMS takes a long time and is onerous from the computational point of view. Furthermore, in case also the previously calculated paths are recalculated, switching traffic from the optimum paths calculated during the initialization operation to the optimum paths calculated afterwards may disadvantageously result in a traffic loss and/or in a transmission delay.

Accordingly, the inventors have addressed the problem of providing a method for managing power consumption in a communication network which overcomes the aforesaid drawbacks.

In particular, the inventors have addressed the problem of providing a method for managing power consumption in a communication network which allows activating new services after the initialization operation, keeping the level of the power consumption of each site lower than the maximum power as determined by the NMS during the initialization operation, without necessarily requesting further executions of the algorithm automatically computing the optimum paths at the NMS.

According to a first aspect, the present invention provides a method for managing power consumption in a communication network cooperating with a global manager, the communication network comprising a first network element and a number of second network elements grouped in a site, the number being equal to or higher than 1, the method comprising, at the global manager:
a) determining a first threshold power indicative of a maximum power that may be consumed by the first network element and a number of second threshold powers indicative of maximum powers that may be consumed by the number of second network elements,
   and, at the first network element:
b) measuring a consumed power;
c) receiving a number of available powers associated to the number of second network elements, an available power associated to a second network element being a difference between the second threshold power of the second network element and a further power consumed by the second network element; and
d) if the consumed power is higher than the first threshold power, checking whether a sum of the number of available powers is equal to or higher than a difference between the consumed power and the first threshold power and, in the affirmative, increasing the first threshold power by the difference, and requesting to at least one of the number of second network elements to reduce its second threshold power by an amount lower than or equal to the difference.

Preferably, steps b), c) and d) are periodically performed.

Preferably, in step d), requesting comprises sending to the at least one of the number of second network elements a first message comprising the amount.

Preferably, step d) comprises, if the sum is lower than a difference between the consumed power and the first threshold power, sending an alarm message to the global manager.

Preferably, the method further comprises, at the global manager, after reception of the alarm message, determining new values of the first threshold power and the number of second threshold powers.

Preferably, the method further comprises, at the first network element, calculating a further available power of the first network element as:
- a difference between the first threshold power and the consumed power, if the first threshold power is higher than or equal to the consumed power; and
- zero, if the first threshold power is lower than the consumed power.

Preferably, the method further comprises, at the first network element, sending to the number of second network elements a second message comprising the calculated further available power.

Preferably, the method further comprises:
e) if the consumed power is not higher than the first threshold power, checking whether at least one of the number of second network elements is requesting to the first network element to reduce the first threshold power and, in the affirmative, reducing the first power threshold.

Preferably, step e) further comprises reducing the further available power of the first network element.

Preferably, step a) comprises determining the first threshold power and the number of second threshold powers such that a sum of the first threshold power, of the number of second threshold powers and of a power consumed by a cooling system of the site is lower than a maximum power that may be consumed at the site.

According to a second aspect thereof, the present invention provides a computer program product comprising computer-executable instructions for periodically performing, when the program is run on a computer at a first network element of a communication network, the following steps:
- gathering a measurement of power consumed by the first network element;
- receiving a number of available powers associated to a number of second network elements of the communication network located at a same site as the first network element, an available power associated to a second network element being a difference between a second threshold power associated to the second network element and a further power consumed by the second network element; and
- if the consumed power is higher than a first threshold power associated to the first network element, checking whether a sum of the number of available powers is equal to or higher than a difference between the consumed power and the first threshold power and, in the affirmative, increasing the first threshold power by the difference, and requesting to at least one of the number of second network elements to reduce its second threshold power by an amount lower than or equal to the difference.

According to a third aspect thereof, the present invention provides a first network element of a communication network, the first network element comprising a power management module configured to:
- gather a measurement of power consumed by the first network element;
- receive a number of available powers associated to a number of second network elements of the communication network located at a same site as the first network element, an available power associated to a second network element being a difference between a second threshold power associated to the second network element and a further power consumed by the second network element; and
- if the consumed power is higher than a first threshold power associated to the first network element, check whether a sum of the number of available powers is equal to or higher than a difference between the consumed power and the first threshold power and, in the affirmative, increase the first threshold power by the difference, and request to at least one of the number of second network elements to reduce its second threshold power by an amount lower than or equal to the difference.

According to a fourth aspect thereof, the present invention provides a communication network comprising a network element as set forth above.

### Brief description of the drawings

Embodiments of the invention will be better understood by reading the following detailed description, given by way of example and not of limitation, to be read with reference to the accompanying drawings, wherein:
- Figure 1 schematically shows an exemplary communication system;
- Figure 2 is a flow chart of the initialization operation according to an embodiment of the present invention;
- Figure 3 is a flow chart of the steady-state operation of a network element of the communication system of Figure 1, according to an embodiment of the present invention;
- Figure 4 schematically shows the format of a power availability message exchanged among the network elements of the communication system of Figure 1; and
- Figure 5 schematically shows a power management table.

### Detailed description of preferred embodiments of the invention

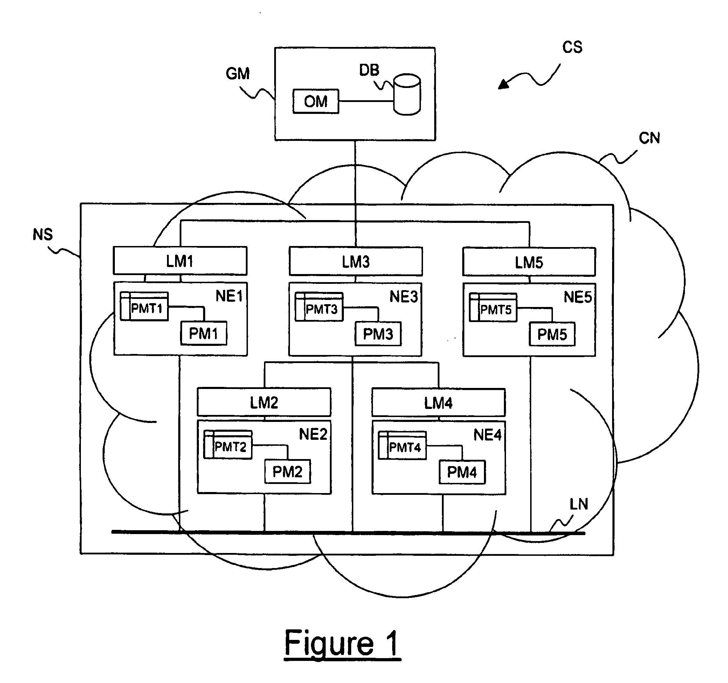

Figure 1 schematically shows a communication system CS suitable for implementing the method according to a preferred embodiment of the present invention.

The communication system CS preferably comprises a communication network CN in turn comprising a plurality of network elements, grouped in different sites. In particular, each site is a building housing one or more network elements. Moreover, each site preferably comprises a cooling system. For simplicity, Figure 1 shows a single site NS comprising, by way of example, five network elements NE1-NE5. The cooling system is not shown for simplicity. Each network element NE1-NE5 may support a single transmission technology (for instance, it may be an Ethernet switch, an IP router, an SDH node, a WDM node, etc.), or it may comprise different sub-systems, each sub-system being configured to support a different transmission technology. Within the site NS, the network elements NE1-NE5 may optionally be connected each other via a local network LN, for example an IP-over-Ethernet network or a DCN (Data Communication Network).

Preferably, each network element NE1-NE5 comprises a power management module PM1-PM5 and a power management table PMT1-PMT5.

Each power management module PM1-PM5 is preferably implemented by means of a dedicated hardware component, or by means of a hardware component capable of executing a software and which is already comprised within the network element NE1-NE5, in combination with a dedicated software. Each power management module PM1-PM5 may be implemented by a single processor, or by a set of processors. Moreover, each power management module PM1-PM5 may comprise a hardware DSP component, a network processor, an ASIC component or an FPGA component, a ROM memory, a RAM memory or a non volatile storage.

Each power management table PMT1-PMT5 preferably comprises information indicative of the power consumption of all the network elements of the site NS. In particular, each power management table PMT1-PMT5 preferably comprises a number of rows equal to the number of network elements of the site NS (five in the present example). For each network element NE1-NE5 of the site NS, the respective row preferably comprises a threshold power PT1-PT5 and an available power AP1-AP5. The threshold power PT1-PT5 preferably indicates the maximum power that may be consumed by the network element NE1-NE5, and it is preferably determined by the global manager GM during an initialization operation, as it will be described in greater detail herein. The available power AP1-AP5 preferably indicates the (positive) difference between the threshold power PT1-PT5 and the power actually consumed by the network element NE1-NE5.

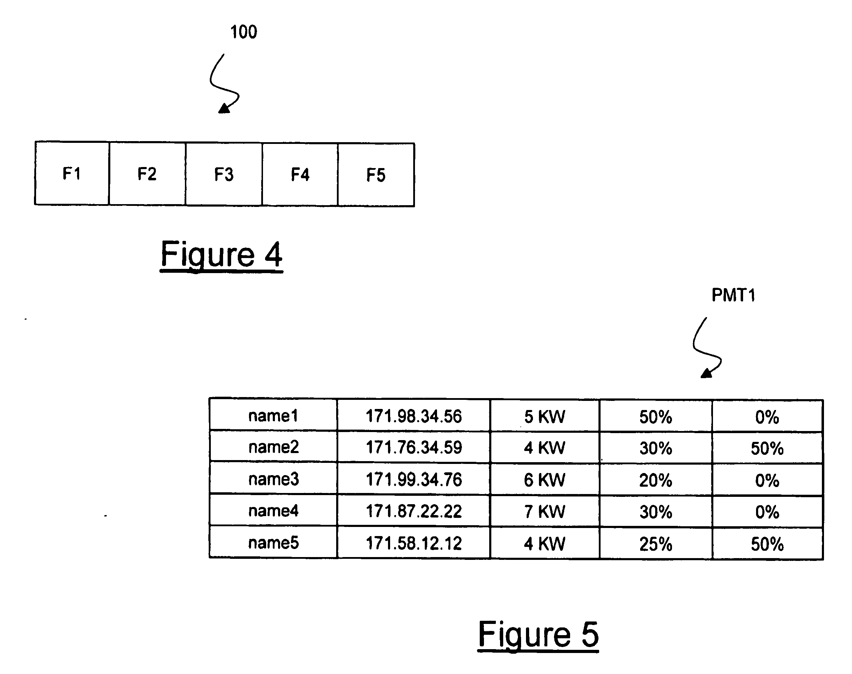

By way of example, Figure 5 shows the power management table PMT1 of the network element NE1.

A first column preferably comprises identifiers of the network elements NE1-NE5. The identifiers are preferably in the form of strings of alphanumeric characters ("name1 ", "name2", "name3", "name4", "name5" in Figure 5). A second column preferably comprises addresses of the network elements NE1-NE5. For instance, the addresses may be IP addresses ("171.98.34.56", "171.76.34.59", "171.99.34.76", "171.87.22.22", "171.58.12.12" in Figure 5). A third column preferably comprises average powers of the network elements NE1-NE5. i.e. the powers consumed by the network elements NE1-NE5 when no optimization aimed at reducing the power consumption of the network elements NE1-NE5 is performed. The average powers are preferably expressed in Watt (5 KW, 4 KW, 6 KW, 7 KW, 4 KW in Figure 5). A fourth column preferably comprises the threshold powers PT1-PT5 of the network elements NE1-NE5. The threshold powers PT1-PT5 are preferably expressed as percentage values of the average powers (50%, 30%, 20%, 30%, 25% in Figure 5). A fifth column preferably comprises the available powers AP1-AP5 of the network elements NE1-NE5. If, for a network element, the difference between the threshold power and the power actually consumed is negative, the corresponding available power is zero. The available powers AP1-AP5 are preferably expressed as percentage values of the threshold powers PT1-PT5 respectively (0%, 50%, 0%, 0%, 50% in Figure 5).

Preferably, each power management module PM1-PM5 of the network element NE1-NE5 is suitable for generating respective power availability messages (briefly referred to as "PAP messages" in the following of the present description), indicating the available power at the network element which has generated the PAP message. If the local network LN is an IP-over-Ethernet network, the PAP messages may be formatted as Ethernet packets.

A preferred format of a PAP message 100 is shown in Figure 4. It preferably comprises:
- a first field F1 comprising the address of the network element which has generated the PAP message;
- a second field F2 comprising the address of the network element to which the PAP message must be sent (this field is optional and may be omitted, if the PAP message is sent by a multicast service);
- a third field F3 comprising the threshold power of the network element which has generated the PAP message; and
- a fourth field F4 comprising the available power of the network element which has generated the PAP message.

Preferably, the communication system CS also comprises a global manager GM and a plurality of local managers.

Preferably, each local manager is configured to cooperate with one or more network elements of the communication network CN. For sake of simplicity, Figure 1 shows five local managers LM1-LM5, each cooperating with a corresponding one of the five network elements NE1-NE5. Each local manager LM1-LM5 is preferably adapted to manage the respective network element NE1-NE5. Preferably, each local manager LM1-LM5 is an EMS according to the known TMN model.

The global manager GM preferably comprises a database DB and an optimization module OM cooperating with the database DB. The optimization module OM is preferably implemented by means of a dedicated hardware component, or a hardware component capable of executing a software and which is already comprised within the global manager GM, in combination with a dedicated software. The optimization module OM may be implemented by a single processor, or by a set of processors. Moreover, the optimization module OM may comprise a hardware DSP component, a network processor, an ASIC component or an FPGA component, a ROM memory, a RAM memory or a non volatile storage. Preferably, the global manager GM is as NMS according to the known TMN model.

Preferably, the global manager GM is connected to the local managers LM1-LM5, which are in turn connected to the network elements NE1-NE5 (or, more particularly, to the "agents" of the network elements, i.e. to suitable interfaces not shown in Figure 1 that support the communication between each network element and the respective local manager). The global manager GM, the local managers LM1-LM5 and the agents of the network elements NE1-NE5 form a management network superimposed to the communication network CN. The management network preferably comprises an Ethernet LAN linking the global manager GM with the local managers LM1-LM5 and a DCN linking the local managers LM1-LM5 and the agents of the network elements NE1-NE5.

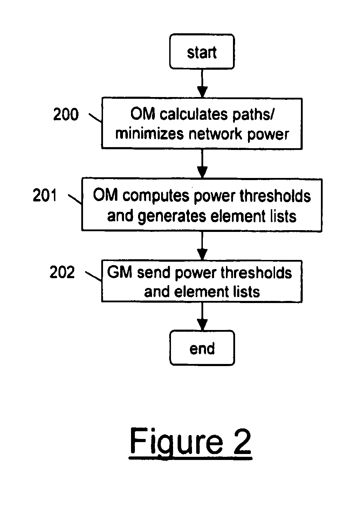

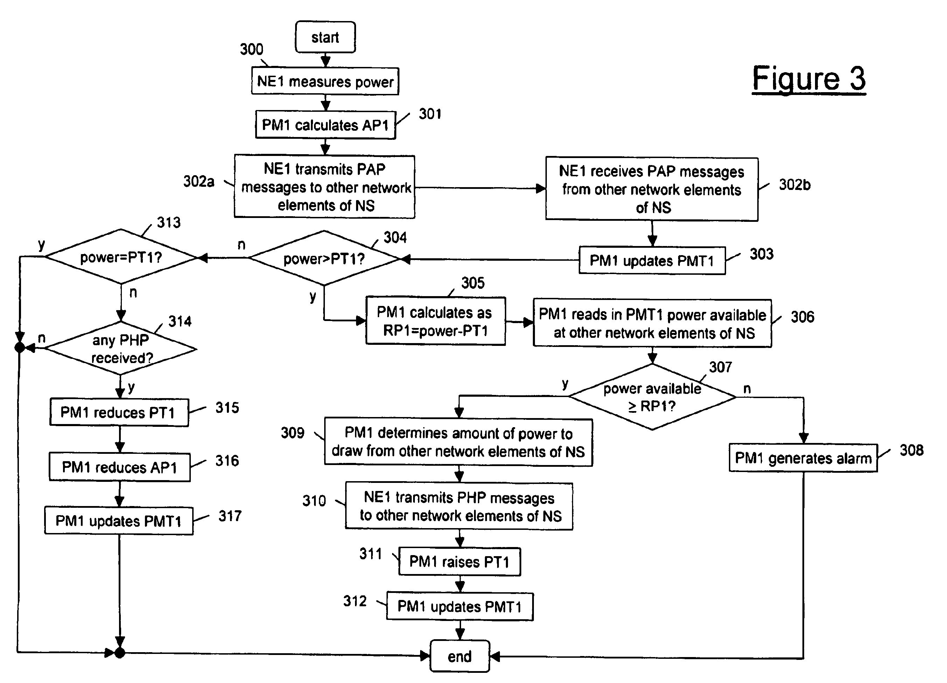

With reference to Figures 2 and 3, in the following the operation of the communication system CS according to a preferred embodiment of the present invention will be described. In particular, the operation of the global manager GM and the network elements, together with their respective local managers, comprised within the site NS will be considered. The operation of the other sites of the communication network CN will not be described, since it is analogous to that described herein after with reference to the site NS.

It is assumed that the communication network CN has been installed but it is not already working and that a network operator has to perform an initialization thereof, i.e. the network operator must configure its network elements so as to set up network paths suitable for carrying a number of services. It is furthermore assumed that the global manager GM has access to (and possibly stores inside its database DB) information related to the network elements of the communications system CS. For instance, these information may be manually input to the global manager GM by a network operator. Alternatively, the global manager GM may automatically gather these information from the network elements through the management network.
These information preferably comprise:
- the number and position of the sites;
- number and position of the network elements;
- technologies supported by the network elements;
- requirements of the services that the network elements must support (for example, bandwidth, service type, quality of service, etc.);
- power consumption of the cooling systems in working conditions; and
- maximum power that may be consumed at each site. The maximum power that may be consumed at each site is preferably set by the network operator and results from a trade-off between the cost of the services that the site has to support and the quality of service (QoS) thereof.

With reference to Figure 2, during step 200, the global manager GM uses its optimization module OM to process the information listed above in order to automatically calculate a number of network paths suitable for supporting the transmission of the requested services. Preferably, the optimization module OM calculates the network paths on the basis of an algorithm that takes into account, among other parameters (e.g. the cost of the links, etc.), also the power consumption of the network elements. In particular, the network paths are computed in such a way that the power consumption of the communication network CN is minimized. For instance, as mentioned above, a WDM device (e.g. an OADM) has a lower power consumption per Mb/s than an Ethernet switch, an IP router or an SDH node. Therefore, the optimization module OM may advantageously minimize the power consumption of the communication network CN exploiting at most the WDM equipments possibly comprised within the network elements of the communication network CN.

During a subsequent step not shown in Figure 2, the global manager GM then sends to the network elements of the communication network CN (in particular, to the network elements NE1-NE5) suitable configuration information through the local managers. The configuration information are preferably carried within one or more management messages formatted according to a management protocol (e.g. SNMP, TL1) supported by the management network. The network elements of the communication network CN (in particular, to the network elements NE1-NE5) preferably use the configuration information to configure their resources (ports, switches, cross-connectors, etc.). This way, the network paths calculated by the optimization module OM are set up, and the transmission of the services may start.

During step 201, the optimization module OM of the global manager GM preferably calculates a threshold power for each network element of the communication network CN. In particular, as mentioned above, the global manager GM receives at its input the maximum power that may be consumed at each site of the communication network (and in particular at site NS) set by the operator. As mentioned above, such a maximum power is preferably determined by the network operator and results from a trade-off between the cost of the services that the site has to support and the quality of service (QoS) thereof. The optimization module OM preferably calculates a threshold power PT1-PT5 for each network element NE1-NE5 of the site NS, such that the sum of the threshold powers PT1-PT5 and the power consumed by the cooling system of the site NS (which is substantially constant) is lower than the maximum power that may be consumed at site NS. Optionally, instead of providing a single threshold power for each network elements, the optimization module OM may provide a set of threshold powers for each network element, each threshold power of the set being associated to a different sub-system (or service, or board) of the network element. Herein after, for simplicity, it is assumed that each network element has assigned a single threshold power.

As mentioned above, the threshold power associated to a network element is preferably indicative of a maximum power that may be consumed by the network element itself. Preferably, the threshold power PT1-PT5 calculated by the global manager GM during step 201 is higher than the power actually consumed by the network element NE1-NE5 configured as determined by the global manager GM during step 200. The network elements NE1-NE5 may have different threshold powers, depending on the cost and QoS of the services that the network elements have to support. For instance, if the network element has to support services with standard QoS requirements, low data transfer rate and low reliability, then the threshold power of the network element may be set to a low value. On the contrary, if the network element has to support services with high QoS requirements, high data transfer rate and high reliability, then the threshold power may be set to a high value.

Moreover, during step 201, the global manager GM preferably generates, for each network element of the communication network CN (and, in particular, for each network element NE1-NE5 of the site NS) a respective element list. The element list associated to one network element (for instance, NE1) is preferably a list of the other network elements belonging to the same site (i.e. NE2, NE3, NE4 and NE5) ordered according to an order determined by the global manager GM. The order according to which the network elements are listed may be for instance a sequential/alphabetical order based on the identifiers of the network elements. This order may be subsequently changed by the global manager GM according to changes occurring in the communication network CN, as it will be described herein after. In the element lists associated to different network elements belonging to the same site, the various network elements may be ordered according to different orders. For instance, the element list associated to network element NE1 may contain NE2, NE3, NE4 and NE5 in that order, while the element list associated to network element NE2 may contain NE3, NE1, NE5 and NE4 in that order.

Then, during a step 202, the global manager GM preferably sends to each network element of the communication network CN (and, in particular, to each network element NE1-NE5 of the site NS) the respective threshold power PT1-PT5 and the respective element list through the respective local manager (in particular, the local managers LM1-LM5). In particular, the threshold powers PT1-PT5 and respective element lists are transmitted within corresponding management messages formatted according to the management protocol (e.g. SNMP, TL1) supported by the management network.

Each network element of the communications network CN (and, in particular, each network element NE1-NE5 of site NS) preferably retrieves the respective threshold power PT1-PT5 and the respective element list (step not shown in Figure 2) and stores them in a storage device (not shown in Figure 1). This way, the initialization operation performed by the global manager GM over the communication network CN ends.

At the end of the initialization operation, the network elements of the communication network CN and the respective local managers are configured to autonomously monitor the power consumed by the communication network CN, as it will be described in detail herein after with reference to Figure 3.

Figure 3 shows the operation of the network element NE1. However, also the other network elements of the site NS and of the other sites of the communication network CN have the same operation.

The steps shown in Figure 3 are preferably periodically repeated by the network element NE1. The repetition period may be selected by the network operator. This period may be, for instance, equal to tens of minutes.

Preferably, at each period the network element NE1 performs a step 300, during which it measures the actual power consumption of all its components (i.e. the cards comprised within the network element). In particular, the network element NE1 may measure the actual power consumption of each card and/or the actual power consumption of the cards supporting the transmission of a given service. For instance, if the network element NE1 comprises different sub-systems, each supporting a different transmission technology (TDM, SDH, Ethernet, WDM, etc.), the network element NE1 is capable of measuring the actual power consumptions of the individual sub-systems.

Then, the power management module PM1 preferably performs a step 301 during which it calculates the available power AP1 of the network element NE1. Preferably, if the threshold power PT1 is higher than or equal to the power actually consumed by the network element NE1, the available power AP1 is calculated as the difference between the threshold power PT1 and the power actually consumed. If, on the contrary, the threshold power PT1 is lower than the power actually consumed by the network element NE1, the available power AP1 is set to zero. Preferably, during this step, the power management module PM1 writes the calculated available power into the power management table PMT1, in particular into the row relating to the network element NE1.

Afterwards, the power management module PM1 preferably generates a PAP message comprising the value of the available power AP1 (step 302a) and sends it to all the other network elements of the site NS (i.e. NE2, NE3, NE4, NE5). Preferably, the PAP message is transmitted to the other network elements of the site NS through the local network LN (for instance by means of an IP or Ethernet multicast service). Substantially at the same time, the network element NE1 receives from all the other network elements of the site NS (i.e. NE2, NE3, NE4, NE5) respective PAP messages (step 302b). Then, during step 303, the power management module PM1 of the network element NE1 preferably uses the content of the PAP messages received from all the other network elements to update, into its power management table PMT1, the values of the threshold powers and available powers of all the other network elements of site NS. These powers indeed may vary over time, as it will be described in further detail herein after.

Successively, during step 304, the power management module PM1 of the network element NE1 preferably compares the power actually consumed by the network element NE1 with the threshold power PT1.

If the power actually consumed by the network element NE1, measured during step 300, is higher than the threshold power PT1, the power management module PM1 of the network element NE1 preferably performs step 305. During step 305, the power management module PM1 preferably computes a requested power RP1 as the (positive) difference between the power actually consumed and the threshold power PT1. This situation may occur when the network element NE1 is reconfigured after the initialization operation for setting up one or more further network paths supporting transmission of one or more further services. In this case, the power consumption of the network element NE1 increases, and it could exceed the threshold power PT1 determined by the global manager GM during the initialization operation.

In this case, the power management module PM1 preferably looks through the power management table PMT1 (step 306) and, during step 307, determines whether the sum of the available powers at the other network elements of the site NS (which available powers, with reference to Figure 5, are listed in the fifth column of the power management table PMT1 and whose values have been updated during step 303) is equal to or higher than the requested power RP1 computed during step 305.

In the negative, the power management module PM1 of the network element NE1 preferably generates an alarm message (step 308) and the network element NE1 sends it to the global manager GM through the local manager LM1. The global manager GM may display information indicative of the received alarm message by means of an output peripheral (e.g. a screen) in order to make them available to a network operator. This way, the network operator is informed that the site NS is consuming a power higher than the maximum power consumable at site NS. Moreover, the alarm message may be stored by the global manager GM together with other alarm messages received from the network element NE1 and, possibly, from the other network elements of the site NE and from other sites of the communications network CN.

If, on the contrary, the sum of the available powers of the other network elements of site NS is equal to or higher than the requested power RP1 computed during step 305, the power management module PM1 of the network element NE1 preferably performs step 309. During step 309, the power management module PM1 preferably determines one or more power portions to be requested to one or more of the network elements of site NS having an available power higher than zero and comprised in the element list associated to network element NE1.

The power portions are determined such that their sum is equal to the requested power RP1 computed during step 305. The power portions may be determined according to different criteria. For instance, the power portions may be tailored so as to minimize the number of network elements that should provide such a power portion. Alternatively, the power portions may be tailored so as to minimize the amount of power requested to each network element.

After determining the power portions, the power management module PM1 preferably writes the value of each power portion into a respective power request messages (briefly referred to as "PHP messages" in the following of the present description), and sends it to the network element that should provide such a power portion (step 310), preferably though the local network LN.

The network elements receiving the PHP messages transmitted by the network element NE1 preferably use the content of these messages to reduce their threshold power and their available power, as it will be explained in further detail herein after.

After step 310, the power management module PM1 of the network element NE1 preferably increases the threshold power PT1 (step 311) such that the new value of the threshold power PT1 is equal to the power measured during step 300 (i.e. it increases the threshold power PT1 by an amount equal to the requested power RP1 computed during step 305). Moreover, the power management module PM1 preferably updates, into the power management table PMT1, the row relating to the network element NE1, by writing therein the threshold power PT1 computed during step 311 (step 312).

Referring back to step 304, if the power actually consumed by the network element NE1, measured during step 300, is not higher than the threshold power PT1 (this situation happens for instance immediately after the initialization operation, since, as mentioned above, the threshold power PT1 chosen by the global manager GM is preferably higher than the actual power consumption of the network element NE1 as configured during the initialization operation), the power management module PM1 preferably checks whether the power actually consumed by the network element NE1, measured during step 300, is equal to the threshold power PT1 (step 313).

In the affirmative, no other operation is performed. In the negative, the power management module PM1 checks whether the network element NE1 received one or more PHP messages from one or more of the other network elements of the site NS (step 314). For sake of simplicity, in the following the network element NE1 is assumed to receive a single PHP message. Preferably, the power management module PM1 reduces the threshold power PT1 (step 315) by the requested power portion whose value is specified in the received PHP message. Moreover, the power management module PM1 preferably reduces also the available power AP1 (step 316) by the requested power portion whole value is specified in the PHP message. Then the power management module PM1 preferably updates, into the power management table PMT1, the row relating to the network element NE1, by writing therein the new value of the threshold power PT1 and of the available power AP1 (step 317).

During the successive period, the power management module PM1 performs again steps 300-304. In particular, during step 304 the power management module PM1 determines again whether the power actually consumed by the network element NE1 is higher than the threshold power PT1, which has been reduced during step 315 of the previous period.

If the power actually consumed is again lower than the threshold power PT1 in spite of the threshold power PT1 reduction (and possibly in spite of an increasing of the power actually consumed by the network element NE1), the power management module PM1 performs again steps 313-317.

If, on the contrary, the power actually consumed became higher than the threshold power PT1 (because, for instance, during the previous period the network element NE1 received one or more PHP messages from different network elements of the site NS, or because the power consumption of network element NE1 increased), the power management module PM1 preferably performs steps 305-312 described above.

As mentioned above, the steps shown in Figure 3 are preferably periodically repeated at the network element NE1. Therefore, during each period, the network element NE1 measures the power that it is actually consuming, exchanges PAP messages with the other network elements for keeping the power management tables updated and, depending on the variations of the actual power consumption at the network elements of the site NS, increases its threshold power by requesting, to one or more of the other network elements of the site NS, to reduce the respective threshold power, or reduces its threshold power upon request of one or more of the other network elements of the site NS.

According to embodiments not shown in the drawings, the steps of Figure 3 are not periodically performed. According to such embodiments, the network element NE1 performs the steps of Figure 3 when its available power AP1 changes, due to either an increase of the consumed power (i.e. upon reception of a new service request and switching on of the resources needed for activating the network path supporting transmission of the service) or a reduction of its threshold power upon request from another network element located at the site NS.

While the network element NE1 periodically performs step 300, the local manager LM1 preferably periodically collects (with a period preferably selected by the network operator, for instance equal to some hours) the measurements performed by the network element NE1 (step not shown in Figure 3).

Moreover, the global manager GM preferably periodically gathers (with a period preferably selected by the network operator, for instance equal to some days) the measurements collected by the local manager LM1 and, preferably, stores them into its database DB (steps not shown in Figure 3). Preferably, the global manager GM gathers and stores also the measurements collected by the local managers LM2, LM3, LM4, LM5 relating to the network elements NE2, NE3, NE4 and NE5. Moreover, as mentioned above, the global manager GM preferably stores the alarm messages generated by the network elements when the power consumed at sites exceeds the sum of the threshold powers of the network elements of sites determined by the global manager GM. After having received a certain number of alarm messages, the global manager GM may repeat the initialization operation described above with reference to Figure 2, by taking into account, during optimization, also the content of the alarm messages. During the initialization operation, the global manager GM also determines new threshold powers and new elements lists for the network elements NE1-NE5.

The flowchart of Figure 3 has been described with reference to network element NE1. The operation of other network elements NE2, NE3, NE4, NE5 of site NS is substantially the same, and therefore a detailed description will not be repeated.

In the following, a numerical example will be described.

It is assumed that, in a given period, the network element NE1 performs steps 300-303 and that the power management table PMT1 shown in Figure 5 results from the updating performed during step 303. It is further assumed that, during step 304, the power management module PM1 of the network element NE1 (whose threshold power PT1 is equal to 50% of 5 KW, i.e. 2500 W) determines that the power that the network element NE1 is actually consuming is higher than the threshold power PT1. In this case, the power management module PM1 computes its requested power RP1 (step 305) which is assumed to be equal, for instance, to 40% of the threshold power PT1, i.e. 1000 W. Then, the power management module PM1 determines, by looking through the power management table PMT1 (step 306), that the network element NE2 has an available power AP2 equal to 600 W (i.e. 50% of its threshold power PT1, which is in turn equal to 30% of 4 KW) and that the network element NE5 has an available power AP5 equal to 500 W (i.e. 50% of its threshold power PT5, which is in turn equal to 25% of 4KW).

The power management module PM1 of the network element NE1 then determines (step 307) that the sum of 600 W and 500 W is higher than 1000 W, and it may for example decide to request a power portion of 500 W to the network element NE2 and a power portion of 500 W to the network element NE5 (step 309).

Hence the power management module PM1 sends a PHP message to the network element NE2 and a PHP message to the network element NE5 (step 310). In both the PHP messages it is specified that 500 W are requested. Then, the power management module PM1 increases its threshold power PT1 by 1000 W (step 311). The new threshold power PT1 is thus 3500 W, i.e. 70% of the average power of 5 KW.

The power management module PM1 then preferably updates, in the power management table PMT1, the row relating to the network element NE1 (step 312), by writing the new threshold power PT1 (i.e. 70%) therein.

With reference e.g. to the network element NE2, its threshold power PT2 is equal to 1200 W (i.e. 30% of 4 KW), while its available power AP2 is equal to 600 W (i.e. 50% of its threshold power PT2). When the network element NE2 receives the PHP message from the network element NE1 (step 313), the power management module PM2 of the network element NE2 reduces the threshold power PT2 to 1200-500=700 W, i.e. 17.5% of the average power of the network element NE2 (step 314). Moreover it reduces the available power AP2 to 600-500=100 W, i.e. nearly 14% of the new threshold power PT2 equal to 700 W (step 315). Then, the power management module PM2 preferably updates the power management table PMT2 by writing the new values of the threshold power PT2 and the available power AP2 (step 316) therein. These new values will be communicated to the other network elements of site NS by means of PAP messages during the successive period.

Therefore, advantageously, the network elements of the site NS autonomously update their threshold powers after the initialization operation. Indeed, the threshold powers that are determined in a centralized way by the global manager GM during the initialization operation (and that represent the initial distribution of power among the different network elements of the site in the initial traffic conditions) may be modified dynamically and autonomously by the network elements, depending on the variations in the power consumptions due to the activation of new services.

This dynamic modification is advantageously implemented by the network elements cooperating by exchanging PAP messages and PHP messages. Therefore, when new services are activated, it is not necessary to perform a new initialization, which involves the global manager GM and it is thus a long, complex and costly operation. The global manager GM is simply informed, through an alarm message, when one or more network elements, by looking through their power management table, realize that the site is actually consuming more power than the maximum power set by the operator. Upon reception of the alarm message, the global manager GM may perform a new computation of the optimal paths, thus minimizing again the power consumption of the communication network CN and reducing the power consumption of each site to a value again lower than a set maximum power. To this aim, the global manager GM may optimize the usage of the resources at each network element, by using techniques such as the "grooming" (i.e. the grouping of several WDM services on a single optical carrier) and/or encapsulating higher level services (e.g. Ethernet services) for transmitting them over lower level paths (e.g. SDH tributaries).

## Claims

1. A method for managing power consumption in a communication network (CN) cooperating with a global manager (GM), said communication network (CN) comprising a first network element (NE1) and a number of second network elements (NE2, NE3, NE4, NE5) grouped in a site (NS), said number being equal to or higher than 1, said method comprising, at said global manager (GM):
a) determining a first threshold power (PT1) indicative of a maximum power that may be consumed by said first network element (NE1) and a number of second threshold powers (PT2, PT3, PT4, PT5) indicative of maximum powers that may be consumed by said number of second network elements (NE2, NE3, NE4, NE5),
and, at said first network element (NE1):
b) measuring a consumed power;
c) receiving a number of available powers (AP2, AP3, AP4, AP5) associated to said number of second network elements (NE2, NE3, NE4, NE5), an available power (AP2, AP3, AP4, AP5) associated to a second network element (NE2, NE3, NE4, NE5) being a difference between the second threshold power (PT2, PT3, PT4, PT5) of said second network element (NE2, NE3, NE4, NE5) and a further power consumed by said second network element (NE2, NE3, NE4, NE5); and
d) if said consumed power is higher than said first threshold power (PT1), checking whether a sum of said number of available powers (AP2, AP3, AP4, AP5) is equal to or higher than a difference between said consumed power and said first threshold power (PT1) and, in the affirmative, increasing said first threshold power (PT1) by said difference, and requesting to at least one of said number of second network elements (NE2, NE3, NE4, NE5) to reduce its second threshold power (PT2, PT3, PT4, PT5) by an amount lower than or equal to said difference.

2. The method according to claim 1, wherein said steps b), c) and d) are periodically performed.

3. The method according to claim 1 or 2, wherein in said step d), said requesting comprises sending to said at least one of said number of second network elements (NE2, NE3, NE4, NE5) a first message comprising said amount.

4. The method according to any of claims 1 to 3, wherein said step d) comprises, if said sum is lower than a difference between said consumed power and said first threshold power (PT1), sending an alarm message to said global manager (GM).

5. The method according to claim 4, wherein it further comprises, at said global manager (GM), after reception of said alarm message, determining new values of said first threshold power (PT1) and said number of second threshold powers (PT2, PT3, PT4, PT5).

6. The method according to any of the preceding claims, further comprising, at said first network element (NE1), a step of calculating a further available power (AP1) of said first network element (NE1) as:
- a difference between said first threshold power (PT1) and said consumed power, if said first threshold power (PT1) is higher than or equal to said consumed power; and
- zero, if said first threshold power (PT1) is lower than said consumed power.

7. The method according to claim 6, further comprising, at said first network element (NE1), a step of sending to said number of second network elements (NE2, NE3, NE4, NE5) a second message comprising said calculated further available power (AP1).

8. The method according to claim 6 or 7, wherein said method further comprises:
e) if said consumed power is not higher than said first threshold power (PT1), checking whether at least one of said number of second network elements (NE2, NE3, NE4, NE5) is requesting to said first network element (NE1) to reduce said first threshold power (PT1) and, in the affirmative, reducing said first threshold power(PT1).

9. The method according to claim 8, wherein said step e) further comprises reducing said further available power (AP1) of said first network element (NE1).

10. The method according to any of the preceding claims, wherein said step a) comprises determining said first threshold power (PT1) and said number of second threshold powers (PT2, PT3, PT4, PT5) such that a sum of said first threshold power (PT1), of said number of second threshold powers (PT2, PT3, PT4, PT5) and of a power consumed by a cooling system of said site (NS) is lower than a maximum power that may be consumed at said site (NS).

11. A computer program product comprising computer-executable instructions for periodically performing, when the program is run on a computer at a first network element (NE1) of a communication network (CN), the following steps:
- gathering a measurement of power consumed by said first network element (NE1);
- receiving a number of available powers (AP2, AP3, AP4, AP5) associated to a number of second network elements (NE2, NE3, NE4, NE5) of said communication network (CN) located at a same site (NS) as said first network element (NE1), an available power (AP2, AP3, AP4, AP5) associated to a second network element (NE2, NE3, NE4, NE5) being a difference between a second threshold power (PT2, PT3, PT4, PT5) associated to said second network element (NE2, NE3, NE4, NE5) and a further power consumed by said second network element (NE2, NE3, NE4, NE5); and
- if said consumed power is higher than a first threshold power (PT1) associated to said first network element (NE1), checking whether a sum of said number of available powers (AP2, AP3, AP4, AP5) is equal to or higher than a difference between said consumed power and said first threshold power (PT1) and, in the affirmative, increasing said first threshold power (PT1) by said difference, and requesting to at least one of said number of second network elements (NE2, NE3, NE4, NE5) to reduce its second threshold power (PT2, PT3, PT4, PT5) by an amount lower than or equal to said difference.

12. A first network element (NE1) of a communication network (CN), said first network element (NE1) comprising a power management module (PM1) configured to:
- gather a measurement of power consumed by said first network element (NE1);
- receive a number of available powers (AP2, AP3, AP4, AP5) associated to a number of second network elements (NE2, NE3, NE4, NE5) of said communication network (CN) located at a same site (NS) as said first network element (NE1), an available power (AP2, AP3, AP4, AP5) associated to a second network element (NE2, NE3, NE4, NE5) being a difference between a second threshold power (PT2, PT3, PT4, PT5) associated to said second network element (NE2, NE3, NE4, NE5) and a further power consumed by said second network element (NE2, NE3, NE4, NE5); and
- if said consumed power is higher than a first threshold power (PT1) associated to said first network element (NE1), check whether a sum of said number of available powers (AP2, AP3, AP4, AP5) is equal to or higher than a difference between said consumed power and said first threshold power (PT1) and, in the affirmative, increase said first threshold power (PT1) by said difference, and request to at least one of said number of second network elements (NE2, NE3, NE4, NE5) to reduce its second threshold power (PT2, PT3, PT4, PT5) by an amount lower than or equal to said difference.

13. A communication network (CN) comprising a network element (NE1) according to claim 12.

## Patentansprüche

1. Verfahren zur Verwaltung des Leistungsverbrauchs in einem Kommunikationsnetzwerk (CN), welches mit einer globalen Verwaltungseinrichtung (GM) zusammenwirkt, wobei das besagte Kommunikationsnetzwerk (CN) ein erstes Netzwerkelement (NE1) und eine Anzahl von zweiten Netzwerkelementen (NE12, NE13, NE4, NE5), die an einem Netzstandort (NS) gruppiert sind, umfasst, wobei die besagte Anzahl gleich oder höher als 1 ist, wobei das besagte Verfahren umfasst:
an der besagten globalen Verwaltungseinrichtung (GM):
a) Bestimmen einer ersten Grenzleistung (PT1), welche für eine maximale Leistung, die von dem besagten ersten Netzwerkelement (NE1) verbraucht werden darf, indikativ ist, und einer Anzahl von zweiten Grenzleistungen (PT2, PT3, PT4, PT5), weiche für die maximalen Leistungen, die von der besagten Anzahl von zweiten Netzwerkelementen (NE2, NE13, NE4, NE5) verbraucht werden dürfen, indikativ sind,
und, an dem besagten ersten Netzwerkelement (NE1):
b) Messen einer verbrauchten Leistung;
c) Empfangen einer mit der besagten Anzahl von zweiten Netzwerkelementen (NE2, NE3, NE14, NE5) assoziierten Anzahl von verfügbaren Leistungen (AP2, AP3, AP4, AP5), wobei eine mit einem zweiten Netzwerkelement (NE12, NE3, NE4, NE15) assoziierte verfügbare Leistung (AP2, AP3, AP4, AP5) eine Differenz zwischen der zweiten Grenzleistung (PT2, PT3, PT4, PT5) des besagten zweiten Netzwerkelements (NE2, NE13, NE4, NE15) und einer weiteren von dem besagten zweiten Netzwerkelement (NE12, NE3, NE4, NE15) verbrauchten Leistung ist; und
d) wenn die besagte verbrauchte Leistung höher als die besagte erste Grenzleistung (PT1) ist, Prüfen, ob eine Summe der besagten Anzahl von verfügbaren Leistungen (AP2, AP3, AP4, AP5) gleich einer oder höher als eine Differenz zwischen der besagten verbrauchten Leistung und der besagten ersten Grenzleistung (PT1) ist, und, wenn dies der Fall ist, Erhöhen der besagten ersten Grenzleistung (PT1) um die besagte Differenz, und Auffordern mindestens eines der besagten Anzahl von zweiten Netzwerkelementen (NE2, NE3, NE4, NE5), dessen zweite Grenzleistung (PT2, PT3, PT4, PT5) um eine Menge von weniger als die besagte oder gleich der besagten Differenz zu reduzieren.

2. Verfahren nach Anspruch 1, wobei die besagten Schritte b), c) und d) periodisch durchgeführt werden.

3. Verfahren nach Anspruch 1 oder 2, wobei das besagte Auffordern in dem besagten Schritt d) das Senden einer ersten Nachricht, welche die besagte Menge enthält, an das besagte mindestens eine der besagten Anzahl von zweiten Netzwerkelementen (NE12, NE3, NE14, NE5) umfasst.

4. Verfahren nach einem beliebigen der Ansprüche 1 bis 3, wobei, wenn die besagte Summe niedriger als eine Differenz zwischen der besagten verbrauchten Leistung und der besagten ersten Grenzleistung (PT1) ist, der besagte Schritt d) das Senden einer Alarmnachricht an die besagte globale Verwaltungseinrichtung (GM) umfasst.

5. Verfahren nach Anspruch 4, weiterhin umfassend, an der besagten globalen Verwaltungseinrichtung (GM) und nach Empfang der besagten Alarmnachricht, das Ermitteln neuer Werte der besagten ersten Grenzleistung (PT1) und der besagten Anzahl von zweiten Grenzleistungen (PT2, PT3, PT4, PT5).

6. Verfahren nach einem beliebigen der vorstehenden Ansprüche, weiterhin umfassend, an dem besagten ersten Netzwerkelement (NE1), einen Schritt des Berechnens einer weiteren verfügbaren Leistung (AP1) des besagten ersten Netzwerkelements (NE11) als:
- Eine Differenz zwischen der besagten ersten Grenzleistung (PT1) und der besagten verbrauchten Leistung, wenn die besagte erste Grenzleistung (PT11) höher als die besagte verbrauchte oder gleich der besagten verbrauchten Leistung ist; und
- Null, wenn die besagte erste Grenzleistung (PT1) niedriger als die besagte verbrauchte Leistung ist.

7. Verfahren nach Anspruch 6, weiterhin umfassend, an dem besagten ersten Netzwerkelement (NE1), einen Schritt des Sendens einer zweiten Nachricht, welche die besagte berechnete weitere verfügbare Leistung (AP1) enthält, an die besagte Anzahl von zweiten Netzwerkelementen (NE12, NE13, NE14, NE5).

8. Verfahren nach Anspruch 6 oder 7, wobei das besagte Verfahren weiterhin umfasst:
e) Wenn die besagte verbrauchte Leistung nicht höher als die besagte erste Grenzleistung (PT1) ist, Prüfen, ob mindestens eines der besagten Anzahl von zweiten Netzwerkelementen (NE2, NE3, NE4, NE5) das besagte erste Netzwerkelement (NE1) auffordert, die besagte erste Grenzleistung (PT1) zu reduzieren und, wenn dies der Fall ist, Reduzieren der besagten ersten Grenzleistung (PT1).

9. Verfahren nach Anspruch 8, wobei der besagte Schritt e) weiterhin das Reduzieren der besagten weiteren verfügbaren Leistung (AP1) des besagten ersten Netzwerkelements (NE1) umfasst.

10. Verfahren nach einem beliebigen der vorstehenden Ansprüche, wobei der besagte Schritt a) das Bestimmen der besagten ersten Grenzleistung (PT1) und der besagten Anzahl von zweiten Grenzleistungen (PT2, PT3, PT4, PT5) derart, dass eine Summe der besagten ersten Grenzleistung (PT1), der besagten Anzahl von zweiten Grenzleistungen (PT2, PT3, PT4, PT5) und einer von einem Kühlsystem des besagten Netzstandorts (NS) verbrauchten Leistung niedriger ist als eine maximale Leistung, die an dem besagten Netzstandort (NS) verbraucht werden darf, umfasst.

11. Computerprogramm-Produkt, umfassend computerausführbare Befehle für das periodische Durchführen, wenn das Programm auf einem Computer an einem ersten Netzwerkelement (NE1) eines Kommunikationsnetzwerks (CN) läuft, der folgenden Schritte:
- Erheben eine Messgröße der von dem besagten ersten Netzwerkelement (NE1) verbrauchten Leistung;
- Empfangen einer Anzahl von verfügbaren Leistungen (AP2, AP3, AP4, AP5), die mit einer Anzahl von zweiten Netzwerkelementen (NE12, NE13, NE4, NE5) des besagten Kommunikationsnetzwerks (CN), welches an demselben Netzstandort (NMS) wie das besagte erste Netzwerkelement (NE1) angeordnet ist, assoziiert sind, wobei eine mit einem zweiten Netzwerkelement (NE2, NE3, NE4, NE5) assoziierte verfügbare Leistung (AP2, AP3, AP4, AP5) eine Differenz zwischen einer mit dem besagten zweiten Netzwerkelement (NE12, NE13, NE14, NE15) assoziierten zweiten Grenzleistung (PT2, PT3, PT4, PT5) und einer von dem besagten zweiten Netzwerkelement (NE2, NE3, NE14, NE5) weiteren verbrauchten Leistung ist; und
- wenn die besagte verbrauchte Leistung höher als eine mit dem besagten ersten Netzwerkelement (NE1) assoziierte erste Grenzleistung (PT1) ist, Prüfen, ob eine Summe der besagten Anzahl von verfügbaren Leistungen (AP2, AP3, AP4, AP5) gleich einer oder höher als eine Differenz zwischen der besagten verbrauchten Leistung und der besagten ersten Grenzleistung (PT1) ist und, wenn dies der Fall ist, Erhöhen der besagten ersten Grenzleistung (PT1) um die besagte Differenz, und Auffordern mindestens eines der besagten Anzahl von zweiten Netzwerkelementen (NE2, NE3, NE4, NE5), dessen zweite Grenzleistung (PT2, PT3, PT4, PT5) um eine Menge, welcher niedriger als die besagte oder gleich der besagten Differenz ist, zu reduzieren.

12. Erstes Netzwerkelement (NE1) eines Kommunikationsnetzwerks (CN), wobei das besagte erste Netzwerkelement (NE1) ein Leistungsverwaltungsmodul (PM1) umfasst, welches für das Durchführen der folgenden Schritte konfiguriert ist:
- Erheben eine Messgröße der von dem besagten ersten Netzwerkelement (NE1) verbrauchten Leistung;
- Empfangen einer Anzahl von verfügbaren Leistungen (AP2, AP3, AP4, AP5), die mit einer Anzahl von zweiten Netzwerkelementen (NE2, NE3, NE4, NE5) des besagten Kommunikationsnetzwerks (CN), welches an demselben Netzstandort (NS) wie das besagte erste Netzwerkelement (NE1) angeordnet ist, assoziiert sind, wobei eine mit einem zweiten Netzwerkelement (NE2, NE3, NE4, NE5) assoziierte verfügbare Leistung (AP2, AP3, AP4, AP5) eine Differenz zwischen einer mit dem besagten zweiten Netzwerkelement (NE2, NE3, NE4, NE5) assoziierten zweiten Grenzleistung (PT2, PT3, PT4, PT5) und einer von dem besagten zweiten Netzwerkelement (NE2, NE3, NE4, NE5) weiteren verbrauchten Leistung ist; und
- wenn die besagte verbrauchte Leistung höher als eine mit dem besagten ersten Netzwerkelement (NE1) assoziierte erste Grenzleistung (PT1) ist, Prüfen, ob eine Summe der besagten Anzahl von verfügbaren Leistungen (AP2, AP3, AP4, AP5) gleich einer oder höher als eine Differenz zwischen der besagten verbrauchten Leistung und der besagten ersten Grenzleistung (PT1) ist und, wenn dies der Fall ist, Erhöhen der besagten ersten Grenzleistung (PT1) um die besagte Differenz, und Auffordern mindestens eines der besagten Anzahl von zweiten Netzwerkelementen (NE2, NE3, NE4, NE5), dessen zweite Grenzleistung (PT2, PT3, PT4, PT5) um eine Menge, welcher niedriger als die besagte oder gleich der besagten Differenz ist, zu reduzieren.

13. Kommunikationsnetzwerk (CN), umfassend ein Netzwerkelement (NE1) gemäß Anspruch 12.

## Revendications

1. Procédé de gestion de la consommation d'énergie dans un réseau de communication (CN) coopérant avec un gestionnaire global (GM), ledit réseau de communication (CN) comprenant un premier élément de réseau (NE1) et un nombre de deuxièmes éléments de réseau (NE2, NE3, NE4, NE5) regroupés dans un site (NS), ledit nombre étant supérieur ou égal à 1, ledit procédé comprenant, au niveau dudit gestionnaire global (GM) les étapes suivantes :
a) déterminer une première énergie de seuil (PT1) indiquant une énergie maximum qui peut être consommée par ledit premier élément de réseau (NE1) et un nombre de deuxièmes énergies de seuil (PT2, PT3, PT4, PT5) indiquant des énergies maximum qui peuvent être consommées par ledit nombre de deuxièmes éléments de réseau (NE2, NE3, NE4, NE5),
et, au niveau dudit premier élément de réseau (NE1) :
b) mesurer une énergie consommée ;
c) recevoir un certain nombre d'énergies disponibles (AP2, AP3, AP4, AP5) associées audit nombre de deuxièmes éléments de réseau (NE2, N3, N4, NE5), une énergie disponible (AP2, AP3, AP4, AP5) associée à un deuxième élément de réseau (NE2, NE3, NE4, NE5) étant une différence entre la deuxième énergie de seuil (PT2, PT3, PT4, PT5) dudit deuxième élément de réseau (NE2, NE3, NE4, NE5) et une autre énergie consommée par ledit deuxième élément de réseau (NE2, NE3, NE4, NE5); et
d) si ladite énergie consommée est supérieure à ladite première énergie de seuil (PT1), vérifier si une somme dudit nombre d'énergies disponibles (AP2, AP3, AP4, AP5) est supérieure ou égale à une différence entre ladite énergie consommée et ladite est supérieure ou égale à une différence entre ladite énergie consommée et ladite première énergie de seuil (PT1) et, si tel est le cas, augmenter ladite première énergie de seuil (PT1) de ladite différence, et demander à au moins un parmi ledit nombre de deuxièmes éléments de réseau (NE2, NE3, NE4, NE5) de réduire sa deuxième énergie de seuil (PT2, PT3, PT4, PT5) selon une quantité inférieure ou égale à ladite différence.

2. Procédé selon la revendication 1, dans lequel lesdites étapes b), c) et d) sont exécutées périodiquement.

3. Procédé selon la revendication 1 ou 2, dans lequel dans ladite étape d), ladite demande comprend l'envoi audit au moins un parmi ledit nombre de deuxièmes éléments de réseau (NE2, NE3, NE4, NE5) d'un premier message comprenant ladite quantité.

4. Procédé selon l'une quelconque des revendications 1 à 3, dans lequel ladite étape d) comprend, si ladite somme est inférieure à une différence entre ladite énergie consommée et ladite première énergie de seuil (PT1), l'envoi d'un message d'alarme audit gestionnaire global (GM).

5. Procédé selon la revendication 4, comprenant en outre, au niveau dudit gestionnaire global (GM), après la réception dudit message d'alarme, la détermination de nouvelles valeurs de ladite première énergie de seuil (PT1) et dudit nombre de deuxièmes énergies de seuil (PT2, PT3, PT4, PT5).

6. Procédé selon l'une quelconque des revendications précédentes, comprenant en outre, au niveau dudit premier élément de réseau (NE1), une étape de calcul d'une autre énergie disponible (AP1) dudit premier élément de réseau (NE1) comme étant :
- une différence entre ladite première énergie de seuil (PT1) et ladite énergie consommée, si ladite première énergie de seuil (PT1) est supérieure ou égale à ladite énergie consommée ; et
- zéro, si ladite première énergie de seuil (PT1) est inférieure à ladite énergie consommée.

7. Procédé selon la revendication 6, comprenant en outre, au niveau dudit premier élément de réseau (NE1), une étape d'envoi audit nombre de deuxièmes éléments de réseau (NE2, NE3, NE4, NE5) d'un deuxième message comprenant ladite autre énergie disponible calculée (AP1).

8. Procédé selon la revendication 6 ou 7, dans lequel ledit procédé comprend en outre l'étape suivante :
e) si ladite énergie consommée n'est pas supérieure à ladite première énergie de seuil (PT1), vérifier si au moins un élément parmi ledit nombre de deuxièmes éléments de réseau (NE2, NE3, NE4, NE5) demande audit premier élément de réseau (NE1) de réduire ladite première énergie de seuil (PT1) et, si tel est le cas, réduire ladite première énergie de seuil (PT1).

9. Procédé selon la revendication 8, dans lequel ladite étape e) comprend en outre la réduction de ladite autre énergie disponible (AP1) dudit premier élément de réseau (NE1).

10. Procédé selon l'une quelconque des revendications précédentes, dans lequel ladite étape a) comprend la détermination de ladite première énergie de seuil (PT1) et dudit nombre de deuxièmes énergies de seuil (PT2, PT3, PT4, PT5) de telle sorte qu'une somme de ladite première énergie de seuil (PT1), dudit nombre de deuxièmes énergies de seuil (PT2, PT3, PT4, PT5) et d'une énergie consommée par un système de refroidissement dudit site (NS) soit inférieure à une énergie maximum qui peut être consommée au niveau dudit site (NS).

11. Produit de programme informatique comprenant des instructions exécutables par ordinateur pour exécuter périodiquement, lorsque le programme est exécuté sur un ordinateur au niveau d'un premier élément de réseau (NE1) d'un réseau de communication (CN), les étapes suivantes :
- collecter une mesure d'énergie consommée par ledit premier élément de réseau (NE1) ;
- recevoir un nombre d'énergies disponibles (AP2, AP3, AP4, AP5) associées à un nombre de deuxièmes éléments de réseau (NE2, NE3, NE4, NE5) dudit réseau de communication (CN) situés dans le même site (NS) que celui dudit premier élément de réseau (NE1), une énergie disponible (AP2, AP3, AP4, AP5) associée à un deuxième élément de réseau (NE2, NE3, NE4, NE5) étant une différence entre une deuxième énergie de seuil (PT2, PT3, PT4, PT5) associée audit deuxième élément de réseau (NE2, NE3, NE4, NE5) et une autre énergie consommée par ledit deuxième élément de réseau (NE2, NE3, NE4, NE5) ; et
- si ladite énergie consommée est supérieure à une première énergie de seuil (PT1) associée audit premier élément de réseau (NE1), vérifier si une somme dudit nombre d'énergies disponibles (AP12, AP3, AP4, AP5) est supérieure ou égale à une différence entre ladite énergie consommée et ladite première énergie de seuil (PT1) et, si tel est le cas, augmenter ladite première énergie de seuil (PT1) de ladite différence, et demander à au moins un parmi ledit nombre de deuxièmes éléments de réseau (NE2, NE3, NE4, NE5) de réduire sa deuxième énergie de seuil (PT2, PT3, PT4, PT5) selon une quantité inférieure ou égale à ladite différence.

12. Premier élément de réseau (NE1) d'un réseau de communication (CN), ledit premier élément de réseau (NE1) comprenant un module de gestion de l'énergie (PM1) configuré pour :
- collecter une mesure d'énergie consommée par ledit premier élément de réseau (NE1) ;
- recevoir un nombre d'énergies disponibles (AP2, AP3, AP4, AP5) associées à un nombre de deuxièmes éléments de réseau (NE2, NE3, NE4, NE5) dudit réseau de communication (CN) situés dans le même site (NS) que celui dudit premier élément de réseau (NE1), une énergie disponible (AP2, AP3, AP4, AP5) associée à un deuxième élément de réseau (NE2, NE3, NE4, NE5) étant une différence entre une deuxième énergie de seuil (PT2, PT3, PT4, PT5) associée audit deuxième élément de réseau (NE2, NE3, NE4, NE5) et une autre énergie consommée par ledit deuxième élément de réseau (NE2, NE3, NE4, NE5) ; et
- si ladite énergie consommée est supérieure à une première énergie de seuil (PT1) associée audit premier élément de réseau (NE1), vérifier si une somme dudit nombre d'énergies disponibles (AP2, AP3, AP4, AP5) est supérieure ou égale à une différence entre ladite énergie consommée et ladite première énergie de seuil (PT1) et, si tel est le cas, augmenter ladite première énergie de seuil (PT1) par ladite différence, et demander à au moins un parmi ledit nombre de deuxièmes éléments de réseau (NE2, NE3, NE4, NE5) de réduire sa deuxième énergie de seuil (PT2, PT3, PT4, PT5) selon une quantité inférieure ou égale à ladite différence.

13. Réseau de communication (CN) comprenant un élément de réseau (NE1) selon la revendication 12.
